# EUROPEAN PATENT SPECIFICATION

(11) **EP 4 411 380 B1**
(45) Date of publication and mention of the grant of the patent: **09.12.2026**
(21) Application number: 22875568.2
(22) Date of filing: 21.07.2022
(51) Int. Cl.: G01N 35/00, G01N 1/38, G01N 35/08

(54) **AUTOMATIC ANALYZER**
AUTOMATISCHES ANALYSEGERÄT
ANALYSEUR AUTOMATIQUE

(30) Priority: 30.09.2021 JP 2021161042
(43) Date of publication of application: 07.08.2024
(73) Proprietor: HITACHI HIGH-TECH CORPORATION, Tokyo 105-6409 (JP)
(72) Inventor: YAMAMOTO Haruyoshi, Tokyo 105-6409 (JP); MIYAKAWA Takushi, Tokyo 105-6409 (JP); MIYAKE Masafumi, Tokyo 105-6409 (JP)
(74) Representative: Strehl & Partner mbB
(86) International application number: PCT/JP2022/028341
(87) International publication number: WO 2023/053691

(56) References cited:
- WO-A1-2020/137140
- WO-A1-2021/014674
- WO-A1-2021/153004
- WO-A1-2021/161704
- JP-A- 2007 057 367
- JP-A- 2007 093 252
- JP-A- 2012 181 102
- JP-A- 2017 146 182
- JP-A- 2018 036 080
- JP-A- 2018 146 374
- JP-A- 2019 074 311
- JP-A- 2020 041 875
- JP-A- 2020 106 424
- JP-A- 2021 139 848
- JP-A- S6 087 887

## Description

### Technical Field

The present invention relates to an automatic analyzer.

### Background Art

Ion-selective electrodes are used in a wide range of fields, including biological, medical, and environmental fields because they can rapidly quantify the concentration of ions to be measured. Particularly in the medical field, ion concentration is closely related to the metabolic response of the body, and is used to diagnose hypertension symptoms, kidney disease, and neuropathy by quantifying certain ions (sodium, potassium, chlorine, etc.) contained in biological samples such as blood and urine.

In addition, electrolyte concentrations in the body are usually maintained in a narrow concentration range, and even small concentration changes are significant.

Therefore, extremely high measurement accuracy is required for ion-selective electrodes, and various technologies have been developed to minimize measurement errors. There is also a need for continuous analysis of large numbers of species in clinical settings.

Many electrolyte measurement devices utilize a method called ion-selective electrode method. The ion-selective polar method measures the electrolyte concentration in a specimen by measuring the potential difference between the ion-selective electrode and the reference electrode. Ion-selective electrodes are equipped with ion-sensitive membranes that generate potential differences in response to ionic components.

This potential varies according to the electrolyte concentration in the specimen. The reference electrode is configured to contact a solution called the reference electrode solution in order to maintain the reference potential. For example, a high concentration aqueous KCl solution is used as the reference electrode solution.

In addition, flow cell type devices can be formed as ion selective electrodes and reference electrodes to achieve high throughput. In this flow cell type device, a flow path for supplying a sample to be measured is provided in the housing, and a sensitive film is provided in contact with the flow path.

In the field of clinical testing, a non-dilution method and a dilution method are known as methods for determining the concentration of electrolytes in biological samples (blood, especially serum and plasma, urine, etc.). The non-dilution method is a method of measuring biological samples as specimens without dilution. On the other hand, the dilution method is a method of diluting a predetermined amount of biological sample with a predetermined amount of diluent, and then measuring the diluted specimen solution (diluted biological sample) using an ion-selective electrode method or the like. The dilution method can achieve high stability in the ion-selective electrode method because the sample liquid requirement is small, the concentration of co-existing substances such as proteins and lipids in the measurement liquid is low, and the contamination by co-existing substances is less affected.

In the electrolyte measurement device for biological examination, the measurement method combining an ion-selective electrode method using a flow cell method and a dilution method is currently mainstream. A container called a dilution tank is used to dilute the sample. The diluted biological sample prepared in the dilution tank is sent through a pipe to a flow cell type ion selective electrode, where the sample is measured.

In the electrolyte analyzer, it is generally known that the analytical performance becomes unstable when bacteria are growing on the diluted specimen, and reagents necessary for measurement (specimen diluent, standard solution, comparison electrode solution, etc.) contain preservatives to prevent bacteria growth. These reagents are used as consumables in the flow type electrolyte analyzer, and are supplied from reagent containers that are individually replaceable.

The amount of use is determined by any set value, and as the number of test devices and tests increase, the frequency of reagent bottle replacement increases, increasing the load on workers. In addition, related device requires bottle change every few hours when continuously operated, and the device operator is tied to a time schedule for reagent bottle replacement.

In addition, the standard solution in particular is a reference reagent for analysis, and it is necessary to calibrate every time the bottle is replaced, since minute concentration changes affect the analytical value. There is a problem that the substantial analysis throughput decreases due to device downtime caused by such as such a bottle replacement work, and the subsequent calibration, which is the work associated with bottle replacement, and the load on the user increases.

One of the countermeasures against the substantial drop in throughput described above is to use pure water provided at the customer's facility as the specimen diluent and to dilute the specimen with the pure water. In this system, pure water is automatically supplied from the facility piping to the device, which is effective in reducing the frequency of replacement.

However, in this method, since the pure water does not contain a preservative, unlike when using the above-mentioned dedicated reagent, there is no means to reduce the proliferation of bacteria when they occur. Therefore, once bacteria grow in the flow path in the device, the analytical performance may deteriorate, and the operator must remove the bacteria by manually introducing a cleaning solution such as hypochlorous acid into the flow path and manually scrubbing the flow path, increasing the maintenance load on the operator. On the other hand, when measures such as ultraviolet sterilization are taken with an emphasis on maintainability, additional components are required, making the system complicated and expensive.

In order to perform accurate ion concentration analysis using ion-selective electrodes on the premise that the above-mentioned specimen dilution method was performed under normal conditions in which bacteria were reduced, in addition to bacteria suppression, it is important to make the temperature of the liquid to be measured and the electrode the same temperature (uniformity) in its measurement principle. Therefore, in the related art, it is common that an automatic electrolyte analyzer has a temperature sensor and a temperature control mechanism, and specimens, reagents, and electrodes are analyzed in a temperature-controlled state near 30 to 40°C, which is close to the body temperature of the human body.

For example, in PTL 1, a technique is disclosed in which "a sample temperature control block is provided in the flow path from the sample aspiration nozzle to the electrode block, the electrode block, the sample temperature control block, and a sensor for measuring the temperature of the outside air are mounted in various places, and the influence of the outside air temperature is reduced by output control of a heater installed in each block so that the temperature of the sample upon reaching each electrode channel including the ion-selective electrode, the reference electrode and the internal liquid of the reference electrode, and the calibration liquid is the same temperature according to the outside air temperature."

In addition, in PTL 2, there is described an electrolyte measurement device including a measurement unit for measuring electromotive force of a standard solution and a sample solution respectively using an electrode unit having an action electrode and a comparison electrode, a dilution tank for diluting the sample liquid with a diluent to produce a sample solution, a sample supply means for supplying the sample liquid to the dilution tank, a diluent supply means for supplying the diluent to the dilution tank, a standard solution supply means for supplying the standard solution to the dilution tank, a measurement liquid supply means for supplying the standard solution and the sample solution from the dilution tank to the electrode unit alternately, and a heat exchange unit provided in the measurement liquid supply means between the dilution tank and the electrode unit.

The document JP 2021139848 A discloses an automatic analyzer according to the preamble of claim 1. Further related art is disclosed in the documents WO 2021/153004 A1 and JP S6087887 A (D3).

### Citation List

### Patent Literature

PTL 1: JP2007-93252A
PTL 2: JP2012-181102A

### Summary of Invention

### Technical Problem

Techniques in the related art use a measurement device equipped with a temperature control mechanism for reagents and the analysis unit to ensure analytical performance. At 30 to 40°C, which is close to the human body temperature and is often used for temperature control, bacteria tend to grow easily in specimens and reagents, so adding preservatives to reagents ensures suppression of bacterial growth in liquids that adversely affects analytical performance.

In this system, the operator is burdened by the high frequency of replacing bottles of reagents in electrolyte analysis. On the other hand, in order to perform the above dilution method without using reagents, it is necessary to use liquids such as pure water that is available in the environment in which the analyzer is installed. However, if the analysis is performed using a liquid such as pure water that does not contain preservatives, bacteria may grow in the liquids and the analytical performance may deteriorate.

In PTL 1 and PTL 2, there is no description about reducing the load of the worker due to replacing reagents to reduce bacteria growth in the reagents, and there is no description about measures to reduce the analysis throughput due to replacing reagents.

The present invention is made in view of the above, and an object of the present invention is to provide an automatic analyzer that can ensure analytical performance and reduce the load of the workers at the same time by sterilizing or removing bacteria in pure water as appropriate using the temperature control mechanism provided to ensure analytical performance without adding complicated structures or work.

### Solution to Problem

In order to achieve the above object, the present invention proposes an automatic analyzer according to claim 1.

### Advantageous Effects of Invention

According to the present invention, it is possible to provide an automatic analyzer that can ensure analytical performance and reduce the load of the workers at the same time by sterilizing or removing bacteria in pure water as appropriate using the temperature control mechanism provided to ensure analytical performance without adding complicated structures or work.

Problems, configurations, and effects other than those described above will be clarified by the following description of the embodiments.

### Brief Description of Drawings

[FIG. 1] FIG. 1 is a diagram showing a schematic configuration of an automatic electrolyte analyzer according to Example 1.
[FIG. 2] FIG. 2 is a diagram schematically showing the state in which only the tip portion of the measuring solution aspiration nozzle is disposed near the deepest part of a dilution tank.
[FIG. 3] FIG. 3 is a diagram schematically showing the state in which both the tip portion of the measuring solution aspiration nozzle and the tip portion of the waste liquid nozzle are disposed near the deepest part of the dilution tank.
[FIG. 4] FIG. 4 is a diagram showing the state in which only the tip portion of the waste liquid nozzle is disposed near the deepest part of the dilution tank.
[FIG. 5] FIG. 5 is a flowchart showing the schematic operation of the automatic electrolyte analyzer according to Example 1.
[FIG. 6] FIG. 6 is a flowchart showing the outline of the specimen measurement process in Example 1.
[FIG. 7] FIG. 7 is a flowchart showing a part of the flowchart shown in FIG. 5.

### Description of Embodiments

Hereinafter, the embodiment of the invention will be described based on the drawings. It should be noted that embodiments of the present invention are not limited to the examples described below, and various modifications are possible in the scope of the technical idea thereof.

### Examples

### (1) Example 1

### (1-1) Device Configuration

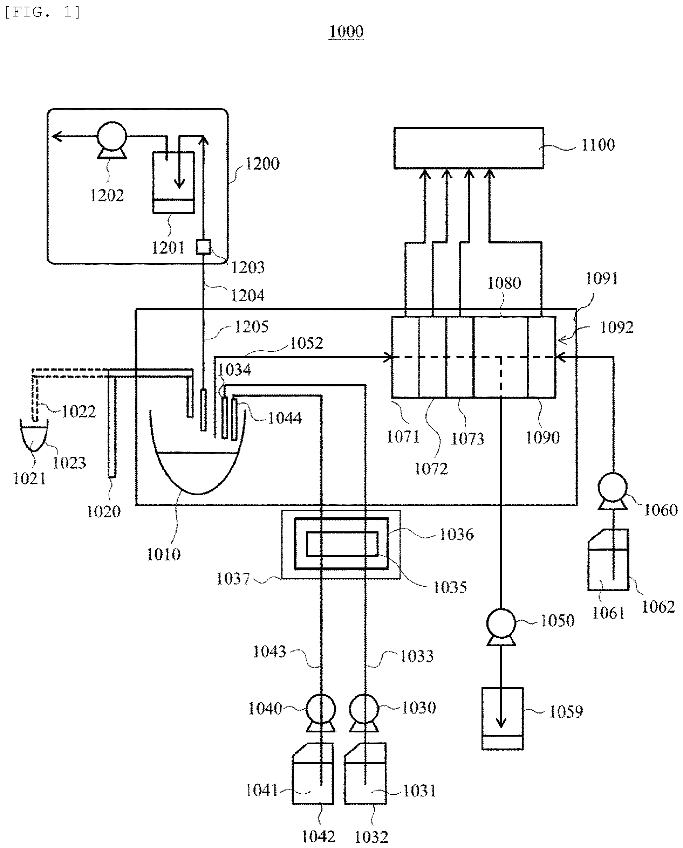

FIG. 1 is a diagram showing a schematic configuration of an automatic electrolyte analyzer 1000 according to Example 1.

In FIG. 1, the automatic electrolyte analyzer 1000 for measuring the concentration of ions contained in a specimen includes a dilution tank 1010, a specimen dispensing mechanism 1020, a diluent dispensing mechanism 1030, an internal standard solution dispensing mechanism 1040, a liquid feeding mechanism 1050, a reference electrode solution feeding mechanism 1060, a flow cell type chloride ion selective electrode (hereinafter referred to as "Cl-ISE") 1071, a flow cell type potassium ion selective electrode (hereinafter referred to as "K-ISE") 1072, a flow cell type sodium ion selective electrode (hereinafter referred to as "Na-ISE") 1073, a flow cell type liquid junction 1080, a flow cell type reference electrode 1090, a measurement control device 1100, and a dilution tank liquid disposal mechanism 1200.

An analysis unit 1092 is provided with the Cl-ISE 1071, the K-ISE 1072, the Na-ISE 1073, the liquid junction 1080, and the reference electrode 1090. A first temperature control unit 1091 is provided with the analysis unit 1092 for performing ion concentration analysis and the dilution tank 1010.

In addition, a specimen storage container 1023 for accommodating a specimen 1021, a diluent 1031, a diluent storage bottle 1032, an internal standard solution 1041, an internal standard solution storage bottle 1042, a reference electrode solution 1061, and a reference electrode solution storage bottle 1062 can each be installed in the automatic electrolyte analyzer 1000. Furthermore, a waste liquid reservoir 1059 can also be installed in the automatic electrolyte analyzer 1000.

The diluent dispensing mechanism 1030 is provided with a diluent dispensing nozzle 1034, a diluent flow path 1033 and a second temperature control unit 1036 of the diluent flow path 1033, a temperature control mechanism 1035 which is a heat source of the second temperature control unit 1036, and an insulation mechanism (insulating material) 1037 for insulating the second temperature control unit 1036 from surroundings. The insulating mechanism 1037 is configured to be disposed between the first temperature control unit 1091 and the second temperature control unit 1036.

A flow path not shown is connected to the diluent dispensing nozzle 1034. Similarly, the internal standard solution dispensing mechanism 1040 is provided with an internal standard solution dispensing nozzle 1044, an internal standard solution flow path 1043 and a second temperature control unit 1036, a temperature control mechanism 1035 which is a heat source of the second temperature control unit 1036, and an insulating mechanism 1037 for insulating the second temperature control unit 1036 from surroundings.

The second temperature control unit 1036 is a metal box that accommodates the diluent flow path 1033 and uses the heat of the temperature control mechanism 1035 to control the temperature of the diluent flow path 1033. Although a metal box was used in this Example 1, the second temperature control unit 1036 only needs to transfer the heat of the temperature control mechanism 1035 to the diluent flow path 1033, and may have a plate-like structure in contact with the diluent flow path 1033 and the second temperature control unit 1036. In addition, it is not limited to metal, and any material with high thermal conductivity may be used.

A flow path not shown is connected to the diluent dispensing nozzle 1034. The liquid feeding mechanism 1050 is provided with a measuring solution aspiration nozzle 1052 and a mechanism (not shown) for driving the measuring solution aspiration nozzle 1052 in a vertical direction. The measuring solution aspiration nozzle 1052 is coupled to the above-mentioned vertical driving mechanism. In addition, a flow path not shown is connected to the measuring solution aspiration nozzle 1052.

The dilution tank liquid disposal mechanism 1200 is provided with a waste liquid trap 1201, a vacuum pump 1202, a solenoid valve 1203, a waste liquid flow path 1204, a waste liquid nozzle 1205 forming a tip of the waste liquid flow path 1204, and a vertical driving mechanism (not shown) for the waste liquid nozzle 1205. The vacuum pump 1202 is located downstream from the waste liquid trap 1201 and introduces waste liquid drawn from the waste liquid nozzle 1205 through the solenoid valve 1203 in the open state into the waste liquid trap 1201. The waste liquid temporarily accumulated in the waste liquid trap 1201 is transferred to the waste liquid reservoir 1059 by the waste liquid transfer mechanism not shown.

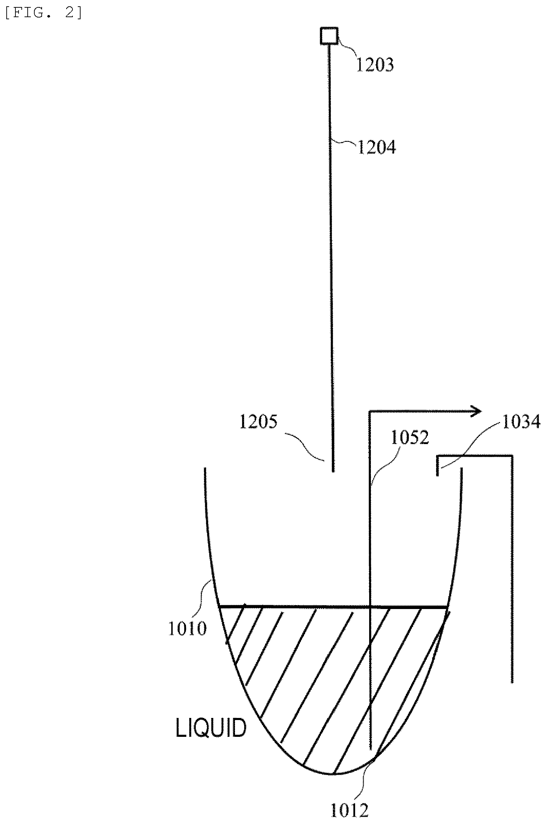

The tip portion of the measuring solution aspiration nozzle 1052 can be disposed near the deepest part 1012 (shown in FIG. 2) of the dilution tank 1010 by a dedicated vertical driving mechanism. Similarly, the tip portion of the waste liquid nozzle 1205 can also be disposed near the deepest part 1012 of the dilution tank 1010 by a dedicated vertical driving mechanism.

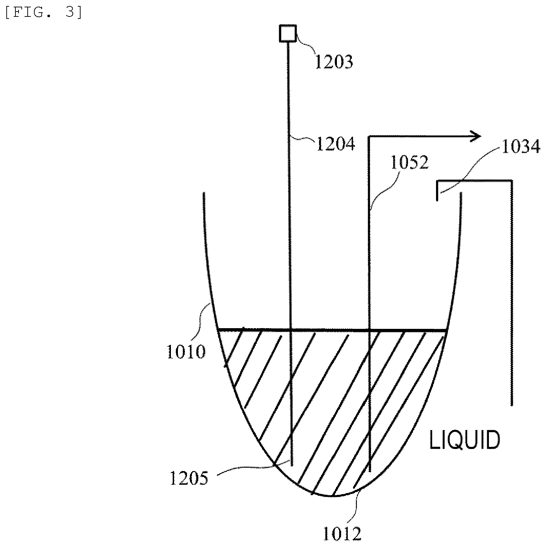

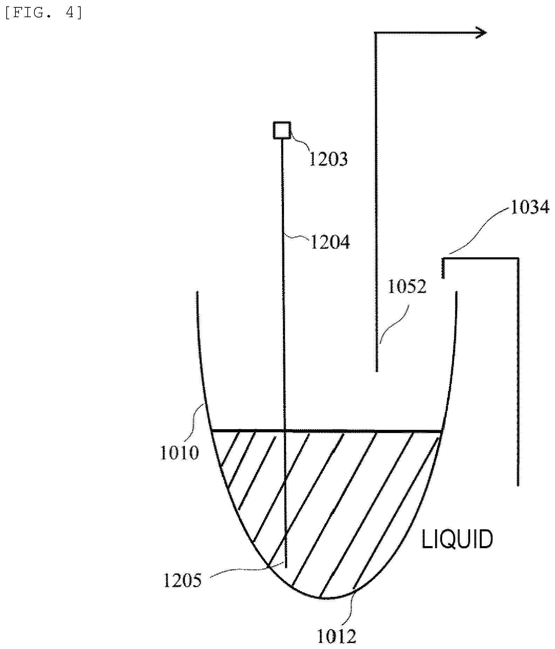

FIG. 2 schematically shows the state in which only the tip portion of the measuring solution aspiration nozzle 1052 is disposed near the deepest part 1012 of the dilution tank 1010. FIG. 3 schematically shows the state in which both the tip portion of the measuring solution aspiration nozzle 1052 and the tip portion of the waste liquid nozzle 1205 are disposed near the deepest part 1012 of the dilution tank 1010. FIG. 4 shows the state in which only the tip portion of the waste liquid nozzle 1205 is disposed near the deepest part 1012 of the dilution tank 1010.

In the case of this Example 1, the measuring solution aspiration nozzle 1052 and the waste liquid nozzle 1205 are arranged in opposite positions (180° apart) across a vertical line which is the rotation axis of the dilution tank 1010. The measuring solution aspiration nozzle 1052 and the waste liquid nozzle 1205 in this Example 1 are raised and lowered in parallel with respect to a vertical line by their respective dedicated vertical driving mechanisms.

In this Example 1, a plurality of flow paths such as liquid for calibration and the like may be provided as necessary in the same manner as the second temperature control unit 1036 and the insulating mechanism 1037.

In addition, in the example shown in FIG. 1, the second temperature control unit 1036, the temperature control mechanism 1035, and the insulating mechanism 1037 for thermal insulation are used to control the diluent flow path 1033 and the internal standard solution flow path 1043. However, the second temperature control unit 1036, the temperature control mechanism 1035, and the insulating mechanism 1037 for thermal insulation may be provided for each diluent flow path 1033 and each internal standard solution flow path 1043.

### (1-2) Measurement Operation

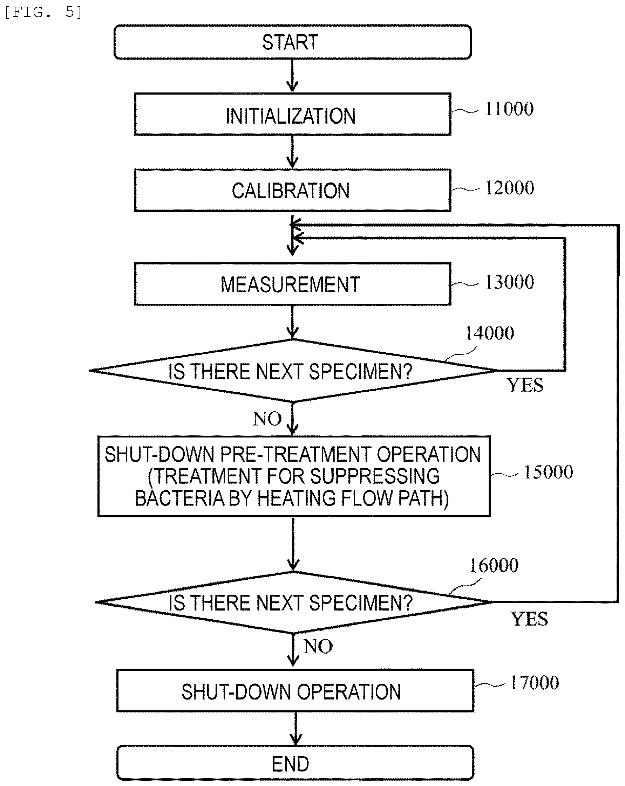

FIG. 5 is a flowchart showing an outline of operations performed in the automatic electrolyte analyzer 1000.

The operation executed in the automatic electrolyte analyzer 1000 is automatically and continuously executed by a program provided by the measurement control device 1100. In the case of this Example 1, after the start-up of the automatic electrolyte analyzer 1000, after the initialization process 11000 and the calibration process 12000, the measurement process 13000 is repeated for the number of specimens, and after the process 14000 of determining whether all specimens have been measured or not, the shutdown process 15000 is executed.

After execution of the shutdown process 15000, it is determined in the next specimen presence and absence determination process 16000 whether or not there is a next specimen. When it is determined in the next specimen presence and absence determination process 16000 that the next specimen is present, the process returns to the measurement process 13000.

When it is determined in the next specimen presence and absence determination process 16000 that the next specimen is absent, the shut-down operation 17000 is executed.

### (1-2-1) Initialization Process 11000

The initialization process 11000 includes preparation such as standing up and cleaning each element mechanism comprising the automatic electrolyte analyzer 1000. As part of the initialization, the measurement control device 1100 transfers the reference electrode solution 1061 to the flow cell type liquid junction 1080 via the reference electrode 1090. In addition, the measurement control device 1100 dispenses an internal standard solution 1041 to the dilution tank 1010, and transfers the solution to the flow cell type liquid junction 1080 through the Cl-ISE 1071, the K-ISE 1072, and the Na-ISE 1073. This liquid transfer is used to condition each ISE.

### (1-2-2) Calibration Process 12000

The calibration process 12000 comprises a low concentration standard solution measurement process 12100 (not shown), a high concentration standard solution measurement process 12200 (not shown), a calibration solution measurement process 12300 (not shown), a calibration curve creation process 12400 (not shown), and the like. The measurement procedure of the low-concentration standard solution, the high-concentration standard solution, and the calibration solution is in accordance with the measurement process 13000 described later. Standard solutions and calibration solutions of each concentration are measured in the same manner as the specimen, and the electromotive force of each ISE is recorded.

In the calibration curve creation process, the measurement control device 1100 determines the slope sensitivity from the electromotive force measurement results of standard solutions of two concentrations, high and low. The measurement control device 1100 determines the concentration of the internal standard solution based on the slope sensitivity and the electromotive force of the internal standard solution. In addition, the measurement control device 1100 determines the calculated concentration of the calibration solution based on the electromotive force measurement result of the calibration solution and the slope sensitivity.

Further, the measurement control device 1100 determines the offset correction value based on the difference between the true concentration (display value) of the calibration solution and the calculated concentration of the calibration solution. The slope sensitivity and offset correction values are called "calibration curves".

### (1-2-3) Measurement Process 13000

The measurement process 13000 mainly comprises a specimen measurement process 13100, an internal standard solution measurement process 13200 (not shown) and a specimen concentration calculation process 13300.

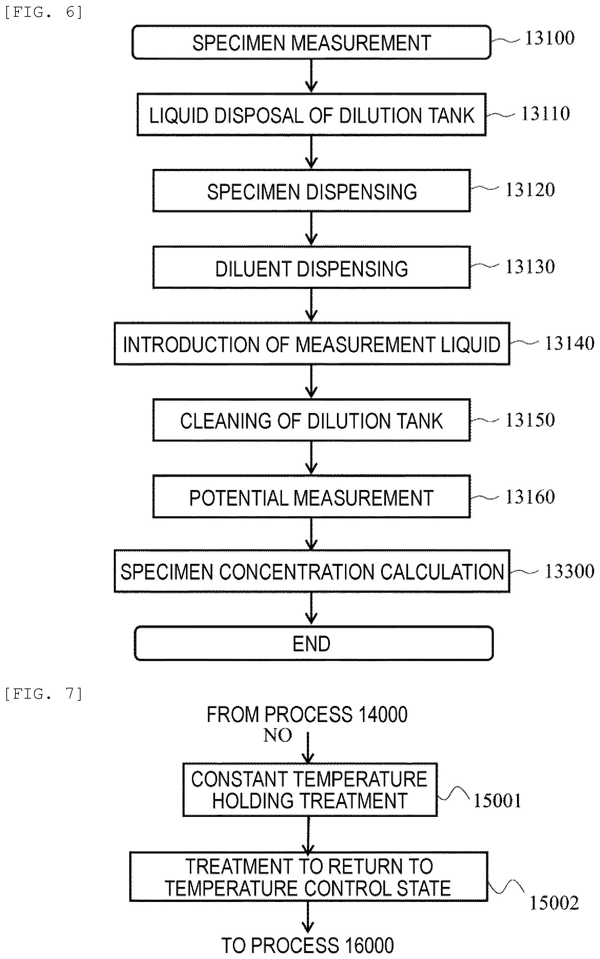

FIG. 6 is a flowchart showing an overview of the specimen measurement process 13100. In FIG. 6, the specimen measurement process 13100 comprises a dilution tank liquid disposal process 13110, a specimen dispensing process 13120, a diluent dispensing process 13130, a measuring solution introduction process 13140, a dilution tank cleaning process 13150, a potential measurement process 13160, a specimen concentration calculation process 13300, and the like. In the following, each process of the specimen measurement process 13100 is described in detail.

In the dilution tank liquid disposal process 13110, the measurement control device 1100 operates the dilution tank liquid disposal mechanism 1200 for the dilution tank to discharge liquid in the dilution tank 1010 (the internal standard solution 1041, the diluent 1031, the system water (not shown), etc.). It should be noted that the solenoid valve 1203 is closed until this process is started. The solenoid valve 1203 is basically closed in a process other than the dilution tank liquid disposal. When the solenoid valve 1203 is opened, the interior of the drain flow path 1204 and the waste liquid trap 1201 is evacuated and depressurized by the action of the vacuum pump 1202. On the other hand, when the solenoid valve 1203 is closed, the pressure in the waste liquid nozzle 1205 is maintained at atmospheric pressure.

After the start of the measurement process 13000, the measurement control device 1100 drives the vertical driving mechanism not shown and immerses the tip portion of the waste liquid nozzle 1205 in the dilution tank 1010 (see FIG. 4). More specifically, the tip portion of the waste liquid nozzle 1205 is disposed approximately 1 mm in the radial direction (horizontal direction) from the deepest part 1012 of the dilution tank 1010 and 0.5 mm vertically above the dilution tank 1010. The measurement control device 1100 opens the solenoid valve 1203 in this state and provides a reduced pressure environment to the dilution tank 1010 through the waste liquid nozzle 1205.

The liquid in the dilution tank 1010 is discharged into the waste liquid trap 1201 through the waste liquid nozzle 1205, the waste liquid flow path 1204, and the solenoid valve 1203. After about one second of discharge, the measurement control device 1100 closes the solenoid valve 1203 and cuts off the reduced pressure. Then, the pressure in the waste liquid nozzle 1205 returns to atmospheric pressure. Finally, the measurement control device 1100 drives the vertical driving mechanism (not shown) and places the tip portion of the waste liquid nozzle 1205 vertically above the dilution tank 1010 (see FIG. 2). That is, the tip portion of the waste liquid nozzle 1205 is moved out of the dilution tank 1010.

In the specimen dispensing process 13120, the measurement control device 1100 aspirates the specimen 1021 into the specimen dispensing nozzle 1022 using the specimen dispensing mechanism 1020. Thereafter, the measurement control device 1100 contacts the tip portion of the specimen dispensing nozzle 1022 with the inner wall of the dilution tank 1010 and discharges all of the aspirated specimens 1021.

In the diluent dispensing process 13130, the measurement control device 1100 uses the diluent dispensing mechanism 1030 to discharge the diluent 1031 through the diluent dispensing nozzle 1034 toward the specimen 1021 from an upper position of the specimen 1021 discharged into the dilution tank 1010.

The diluent 1031 spirals along the inner surface of the dilution tank 1010 while winding the specimen 1021 and flows into the inner bottom of the dilution tank 1010, and the specimen 1021 is diluted by the diluent 1031 and the two are mixed uniformly. In this diluent dispensing process 13130, a diluted sample in which the specimen 1021 is diluted at a predetermined ratio (hereinafter referred to as "dilution ratio") by the diluent 1031 is obtained in the dilution tank 1010. In the case of Example 1, the dilution ratio is 31 times. A diluted sample is a type of sample solution and is called a "sample solution".

In the measuring solution introduction process 13140, the measurement control device 1100 immerses the measuring solution aspiration nozzle 1052 in the sample solution in the dilution tank 1010 using a dedicated vertical driving mechanism (not shown) (see FIG. 2). In a process other than the measuring solution introduction process 13140, this vertical driving mechanism basically positions the measuring solution aspiration nozzle 1052 vertically above the dilution tank 1010 and protrudes the tip of the measuring solution aspiration nozzle 1052 outside the dilution tank 1010.

Next, the measurement control device 1100 coordinates the liquid feeding mechanism 1050 and the reference electrode solution feeding mechanism 1060 to feed the reference electrode solution 1061 through the reference electrode 1090 to the flow cell type liquid junction 1080.

Subsequently, the measurement control device 1100 sends the sample solution in the dilution tank 1010 as the measuring solution through the Cl-ISE 1071, the K-ISE 1072, and the Na-ISE 1073 in turn to the flow cell type liquid junction 1080. The measuring solution and the reference electrode solution 1061 come into contact at the junction of the flow path in the flow cell type liquid junction 1080, forming a free flow type liquid junction and making it possible to measure the potential.

Thereafter, the measurement control device 1100 discharges the liquid between the flow cell type liquid junction 1080 and the liquid feeding mechanism 1050 to the waste liquid reservoir 1059. After the feeding is completed, the measurement control device 1100 uses a vertical driving mechanism for the measuring solution aspiration nozzle 1052 to pull the measuring solution aspiration nozzle 1052 from the dilution tank 1010.

In the dilution tank cleaning process 13150, the measurement control device 1100 first performs the same operation as the dilution tank liquid disposal process 13110 described above, and discharges the sample solution remaining in the dilution tank 1010. Next, the measurement control device 1100 controls the diluent dispensing mechanism 1030 and the internal standard solution dispensing mechanism 1040, and uses a syringe pump (not shown) connected to the specimen dispensing nozzle 1022 to dispense the system water not shown through the specimen dispensing nozzle 1022 to the dilution tank 1010 and cleans the dilution tank 1010. The diluent 1031 or the internal standard solution 1041 can also be dispensed instead of the system water. The diluent 1031, the internal standard solution 1041, and the system water can be dispensed and mixed to clean the dilution tank 1010.

In the potential measurement process 13160, the measurement control device 1100 measures and records the electromotive force of each of the flow cell type Cl-ISE 1071, K-ISE 1072, and Na-ISE 1073 with reference to the reference electrode 1090 using a built-in voltage amplifier, AD converter, microcomputer, etc.

Thereafter, the specimen concentration calculation process 13300 is executed. In the specimen concentration calculation process 13300, the measurement control device 1100 calculates the concentration ratio of the specimen and the internal standard solution based on the difference in electromotive force between the diluted specimen in each ISE and the internal standard solution obtained in the potential measurement process 13160 of the specimen measurement process 13100 and the potential measurement process 13160, which is the internal standard solution measurement process, and the slope sensitivity and the dilution ratio (31 times in this Example 1) obtained in the calibration process 12000 (FIG. 5), which is a calibration curve creation process. The measurement control device 1100 multiplies this concentration ratio by the concentration of the internal standard solution obtained in the calibration process 12000 to obtain the concentration of the specimen (before offset correction). By adding an offset correction value to the concentration of the specimen, the measurement control device 1100 determines the concentration of the specimen (after offset correction).

With the above procedure, the measurement control device 1100 obtains the concentration of Cl, K, and Na in the specimen, respectively, and reports the result to the user.

### (1-2-4) Processes 14000 and 15000

Return to the description in FIG. 5. After the measurement process 13000, the measurement control device 1100 executes the process 14000 to determine whether all specimens have been measured, and if all specimens have been measured, the measurement control device 1100 executes the bacteria suppression process 15000 of the flow path, which is a shut-down pre-treatment operation.

As shown in FIG. 7, the bacteria suppression process 15000, which is a startup pre-treatment operation, includes a constant temperature holding treatment process 15001 and a return processing process 15002 to a temperature-controlled state.

In the constant temperature holding treatment process 15001, the first temperature control unit 1091 controls the temperature of the analysis unit 1092, the dilution tank 1010, and the like by controlling the measurement control device 1100. The first temperature control unit 1091 maintains the temperature-controlled state of the waste liquid nozzle 1205, the diluent dispensing nozzle 1034, the measuring solution aspiration nozzle 1052, the Cl-ISE 1071, the K-ISE 1072, the Na-ISE 1073, the flow cell type liquid junction 1080, and the flow cell type reference electrode 1090 at a first temperature (20°C to 45°C), which are each in a constant temperature range.

Further, in the constant temperature holding treatment process 15001, the second temperature control unit 1036 which is thermally separated from the waste liquid nozzle 1205, the diluent dispensing nozzle 1034, the measuring solution aspiration nozzle 1052, the Cl-ISE 1071, the K-ISE 1072, the Na-ISE 1073, the flow cell type liquid junction 1080, and the flow cell type reference electrode 1090 controls the measurement control device 1100 to hold the diluent flow path 1033 and the internal standard solution flow path 43 at a second temperature (50°C to 90°C) which is a constant temperature range for a certain period of time using the temperature control mechanism 1035.

By the operation of the second temperature control unit 1036 in the constant temperature holding treatment process 15001, the liquid in the diluent flow path 1033 and the liquid in the internal standard solution flow path 1043 are sterilized, thereby suppressing the proliferation of bacteria. The time required for suppressing the bacteria growth is mainly determined from the set temperature of the temperature control mechanism 1035. For example, 30 minutes is a guide at 63°C, and the higher the set temperature, the shorter the time required for suppressing bacteria.

After completion of the temperature holding process 15001 of the bacteria suppression process, the process proceeds to the return processing process 15002 to the temperature-controlled state.

Similar to the measurement process 13000, the return processing process 15002 repeats the feeding and discharge (see FIGS. 2 to 4) of the diluent 1031 and the internal standard solution 1041 retained in the constant temperature range (50°C to 90°C) in the dilution tank 1010 once (discharge at least a part of the liquid used for analyzing the specimen by the dilution tank liquid disposal mechanism 1200) or a plurality of times, so that it is possible to quickly return the temperature-controlled state of the second temperature control unit 1036 to the temperature-controlled state (20°C to 45°C) in the measurement process 13000 while maintaining the temperature-controlled state of the Cl-ISE 1071, the K-ISE 1072, the Na-ISE 1073, the flow cell type liquid junction 1080, and the flow cell type reference electrode 1090, respectively. A liquid of a temperature equivalent to room temperature are fed to the diluent flow path 1033 and the internal standard solution flow path 1043 at least once, and the liquid is discharged at least one or more times using the dilution tank liquid disposal mechanism 1200, thereby performing an exhaust heat operation to exhaust heat from the diluent storage bottle 1032 and the internal standard solution storage bottle 1042, which are liquid storage units.

If the dilution tank liquid disposal mechanism 1200 or the waste liquid nozzle 1205 is not provided, it is possible to quickly return the temperature-controlled state of the diluent flow path 1033, the internal standard solution flow path 1043, the liquid in the flow path, and the second temperature control unit 1036 to the temperature-controlled state (20°C to 45°C) in the measurement process 13000 by providing a temperature cooling means such as a Peltier element in addition to the temperature control mechanism 1035 of the heating type such as a heater in the second temperature control unit 1036. Meanwhile, by providing the dilution tank liquid disposal mechanism 1200 or the waste liquid nozzle 1205, it is possible to quickly return the temperature-controlled state (20°C to 45°C) in the measurement process 13000, without the need to add cooling unit in the diluent flow path 1033 and the internal standard solution flow path 1043.

It should be noted that when a liquid in a constant temperature range (50°C to 90°C) is discharged from the waste liquid nozzle 1205 to the dilution tank liquid disposal mechanism 1200 by the same operation as the measurement process 13000 after discharging from the diluent flow path 1033 and the internal standard solution flow path 1043 to the dilution tank 1010, if parts with low heat resistance temperature are used for each part of the dilution tank liquid disposal mechanism 1200, the waste liquid trap 1201, the vacuum pump 1202, the solenoid valve 1203, and the waste liquid nozzle 1205, there is a risk that some or all of the dilution tank liquid disposal mechanism 1200, the waste liquid trap 1201, the vacuum pump 1202, the solenoid valve 1203, and the waste liquid nozzle 1205 deteriorate.

As a measure to prevent this risk, it is possible to dispense the system water (temperature is room temperature) not shown through the specimen dispensing nozzle 1022 to the dilution tank 1010 using a syringe pump (not shown) connected to the specimen dispensing nozzle 1022, to cool the liquid of approximately the same constant temperature range (50°C to 90°C) as the second temperature control unit 1036, discharged from the diluent dispensing nozzle 1034 or the internal standard solution dispensing nozzle 1044 to the dilution tank 1010 by mixing them in the dilution tank 1010, and then to discharge the waste liquid to the dilution tank liquid disposal mechanism 1200 using the waste liquid nozzle 1205 (see FIG. 4), thereby protecting the parts of the dilution tank liquid disposal mechanism 1200, the waste liquid trap 1201, the vacuum pump 1202, the solenoid valve 1203, and the waste liquid nozzle 1205 from unnecessary heating.

In the above process, when the second temperature control unit 1036 and the temperature control mechanism 1035 are not sufficiently thermally separated from the analysis unit 1092, the temperatures of the Cl-ISE 1071, the K-ISE 1072, the Na-ISE 1073, the flow cell type liquid junction 1080, and the flow cell type reference electrode 1090 used for analysis are unintentionally heated in imitation of the temperature of the second temperature control unit 1036, and the analysis accuracy decreases, and thus, it is necessary to separate the analysis unit 1092 and the second temperature control unit 1036 (50°C to 90°C) by providing the insulating mechanism 1037 of the second temperature control unit 1036.

The temperature control mechanism 1035 and the insulating mechanism 1037 may be thermally separated by separating a physical space, or may be in a state in which physical contact with the waste liquid nozzle 1205, the diluent dispensing nozzle 1034, the measuring solution aspiration nozzle 1052, the Cl-ISE 1071, the K-ISE 1072, the Na-ISE 1073, the flow cell type liquid junction 1080, and the flow cell type reference electrode 1090 has occurred by using an insulating material.

It should be noted that in the case of heating during analysis in the measurement process 13000, since the diluent 1031 and the internal standard solution 1041 necessary for measurement are discharged into the dilution tank 1010 in the heated state, and the analysis accuracy may be reduced even if the second temperature control unit 1036 and the insulating mechanism 1037 are respectively provided, it is preferable to heat the second temperature control unit 1036 with the shut-down pre-treatment operation 15000.

Also, in the process 14000 for determining whether all specimens have been measured, it is determined that there is no next specimen, and even if the shut-down pre-treatment operation 15000 is started, the user of the analyzer may need to measure an additional specimen at short notice. In that case as well, by quickly stopping the heating operation of the diluent flow path 1033 and the internal standard solution flow path 1043 started in the shut-down pre-treatment operation 15000 and repeating feeding and discharging the diluent 1031 and the internal standard solution 1041 maintained at a constant temperature range (50°C to 90°C) in the dilution tank 1010 once or a plurality of times (see FIGS. 2 to 4), it is possible to quickly return the temperature-controlled state of the second temperature control unit 1036 to the temperature-controlled state (20°C to 45°C) in the measurement process 13000 while maintaining the temperature-controlled state of the Cl-ISE 1071, the K-ISE 1072, the Na-ISE 1073, the flow cell type liquid junction 1080, and the flow cell type reference electrode 1090, respectively, and to return to the measurement process 13000 in a relatively short time.

If the shut-down pre-treatment operation 15000 is completed and there is no next specimen, the shut-down operation 17000 of the device is executed thereafter to prepare for the power cutoff.

It should be noted that the shutdown pretreatment operation (bacteria suppression processing by flow path heating) 15000 can be automated by specifying a process start time according to the customer's usage, or the process 15000 can be automatically started after a certain period of time when there is no next specimen. In other words, the second temperature control unit 1036 starts heating at any time from the state that has been regulated at the first temperature by the first temperature control unit 1091, transitions to the state that has been regulated at the second temperature in a certain time, and transitions from the state that has been regulated at the second temperature to the state that has been regulated at the first temperature in a short period of time by the exhaust heat operation described above.

It should be noted that the insulating mechanism 1037 for the second temperature control unit 1036 and the temperature control mechanism 1035 also has a function to prevent the risk of the customer getting burnt by directly touching the second temperature control unit 1036 and the temperature control mechanism 1035, which are maintained at 50°C to 90°C, during the shut-down pre-treatment operation (bacteria suppression process by heating the flow path) 15000.

According to Example 1, it is possible to provide an automatic analyzer that can ensure analytical performance and reduce the load of the workers at the same time by sterilizing or removing bacteria in pure water as appropriate using the temperature control mechanism provided to ensure analytical performance without adding complicated structures or work.

### (2) Example 2

Next, Example 2 of the present invention will be described.

In Example 1, when the temperature-controlled state of the diluent flow path 1033, the internal standard solution flow path 1043, the liquid in the flow path, and the second temperature control unit 1036 are quickly returned to the temperature-controlled state (20°C to 45°C) in the measurement process 13000, by feeding or discharging (see FIGS. 2 to 4) the internal standard solution 1041 maintained at a constant temperature range (50°C to 90°C) in the dilution tank 1010 once or a plurality of times, it is possible to quickly return the temperature-controlled state of the second temperature control unit 1036 to the temperature-controlled state (20°C to 45°C) in the measurement process 13000 while maintaining the temperature-controlled state of the Cl-ISE 1071, the K-ISE 1072, the Na-ISE 1073, the flow cell type liquid junction 1080, and the flow cell type reference electrode 1090 at 20°C to 45°C, respectively, and to return to the measurement process 13000 in a relatively short time.

At that time, by feeding a finite amount of reagent to the flow path, such as the internal standard solution 1041 in the internal standard solution storage bottle 1042, the amount of the internal standard solution 1041 in the internal standard solution storage bottle 1042 is consumed, and the frequency of reagent replacement increases.

Therefore, the second temperature control unit 1036 is contacted with the diluent flow path 1033 and the internal standard solution flow path 1043, and the diluent flow path 1033 and the internal standard solution flow path 1043 are configured to be heat exchangeable through the second temperature control unit 1036.

In addition, system water is introduced into the diluent storage bottle 1032 as the diluent 1032, and system water is automatically replenished in the diluent storage bottle 1032, and only system water is fed and discharged without feeding and discharging the internal standard solution 1041. As a result, without increasing the consumption of the internal standard solution 1041 and the frequency of replacement of the internal standard solution storage bottle 1042, it is possible to quickly return the temperature-controlled state of the second temperature control unit 1036 to the temperature-controlled state (20°C to 45°C) in the measurement process 13000 and to return to the measurement process 13000 in a relatively short time.

At that time, since both the diluent flow path 1033 and the internal standard solution flow path 1043 pass through the second temperature control unit 1036, the return processing process 15002 described above can be achieved using only system water as the diluent 1032. In this return processing process 15002, it is possible for the diluent flow path 1033 and the internal standard solution flow path 1043 to thermally exchange in the second temperature control unit 1036, and the internal standard solution flow path 1043 can also quickly return to the temperature-controlled state (20°C to 45°C) in the measurement process 13000 without consuming the internal standard solution 1041, and can return to the measurement process 13000 in a relatively short time.

Liquids (pure water and the like) that do not have antiseptic capabilities can be used as system water.

Since the other configurations of the automatic electrolyte analyzer 1000 are the same as those of Example 1, the illustrations and detailed description are omitted.

According to Example 2, the effect similar to that of Example 1 can be obtained, and the return processing to the temperature-controlled state (20°C to 45°C) can be performed without consuming the internal standard solution.

It should be noted that in this Example 2, the diluent flow path 1033 and the internal standard solution flow path 1043 were configured to be heat exchangeable through the second temperature control unit 1036, but it is sufficient if the diluent flow path 1033 and the internal standard solution flow path 1043 are heat exchangeable, and other configurations may be used as long as the configuration is capable of heat exchange with each other without going through the second temperature control unit 1036.

Also, in Examples 1 and 2, it is possible to configure at least one of the diluent flow path 1033 or the internal standard solution flow path 1043 to be temperature controlled to a second temperature of 50°C to 90°C.

In addition, the first temperature control unit 1091 and the second temperature control unit 1036 are collectively referred to as the temperature control unit. Therefore, the temperature control unit is provided with the first temperature control unit 1091 and the second temperature control unit 1036. The first temperature control unit 1091 and the second temperature control unit 1036 can operate independently of each other.

In addition, although the example described above is an example of applying the invention to an automatic electrolyte analyzer, the invention can be applied to other automatic analyzers.

### Reference Signs List

- 1000:: automatic electrolyte analyzer,
- 1010:: dilution tank,
- 1012:: deepest part,
- 1020:: specimen dispensing mechanism,
- 1021:: specimen,
- 1022:: specimen dispensing nozzle,
- 1023:: specimen storage container,
- 1030:: diluent dispensing mechanism,
- 1031:: diluent,
- 1032:: diluent storage bottle,
- 1033:: diluent flow path,
- 1034:: diluent dispensing nozzle,
- 1035:: temperature control mechanism,
- 1036:: second temperature control unit,
- 1037:: insulating mechanism,
- 1040:: internal standard solution dispensing mechanism,
- 1041:: internal standard solution,
- 1042:: internal standard solution storage bottle,
- 1043:: internal standard solution flow path,
- 1044:: internal standard solution dispensing nozzle,
- 1050:: liquid feeding mechanism,
- 1052:: measuring solution aspiration nozzle,
- 1059:: waste liquid reservoir,
- 1060:: reference electrode solution feeding mechanism,
- 1061:: reference electrode solution,
- 1062:: reference electrode solution storage bottle,
- 1071:: flow cell type Cl-ISE,
- 1072:: flow cell type K-ISE,
- 1073:: flow cell type Na-ISE,
- 1080:: flow cell type liquid junction,
- 1090:: flow cell type reference electrode,
- 1091:: first temperature control unit,
- 1092:: analysis unit,
- 1100:: measurement control device,
- 1200:: dilution tank liquid disposal mechanism,
- 1201:: waste liquid trap,
- 1202:: vacuum pump,
- 1203:: solenoid valve,
- 1204:: waste liquid flow path,
- 1205:: waste liquid nozzle

## Claims

1. An automatic analyzer (1000) comprising:
an analysis unit (1092) for analyzing a specimen;
a dilution tank (1010) for diluting the specimen;
a measuring solution aspiration nozzle (1052) for feeding the measuring solution from the dilution tank (1010) to the analysis unit (1092);
an internal standard solution flow path (1043) for feeding the internal standard solution to the dilution tank (1010);
a diluent flow path (1033) for feeding a diluent to the diluent tank;
a first temperature control unit (1091) configured to control the temperature of the analysis unit (1092) to a first temperature of 20°C to 45°C during analysis operation; and
a second temperature control unit (1036) configured to contact with the internal standard solution flow path (1043) and the diluent flow path (1033), and after the analysis operation by the analysis unit (1092) is completed, the second temperature control unit (1036) is configured to control the temperature of the internal standard solution flow path (1043) and the diluent flow path (1033) to a second temperature of 50°C to 90°C, and then returns to the first temperature, and
a liquid disposal mechanism (1200) for draining at least a part of the liquid in the dilution tank (1010); wherein
the diluent flow path (1033) and the internal standard solution flow path (1043) are configured so as to be capable of heat exchange with each other,
**characterized in that** the automatic analyzer is configured such that after the temperature is controlled at the second temperature by the second temperature control unit (1036), the diluent at a temperature equivalent to room temperature is fed into the dilution tank (1010) through the diluent flow path (1033), and the second temperature control unit (1036) undergoes heat exchange by performing an exhaust heat operation for exhausting heat from the internal standard solution flow path and the diluent flow path by sending the diluent at to the diluent flow path at least once and discharging the liquid in the dilution tank at least once using the liquid disposal mechanism (1200), thereby enabling quick return to analytical operations without consuming internal standard solution, and the temperature returns to the first temperature;
a heat insulating material (1037) disposed between the first temperature control unit (1091) and the second temperature control unit (1036).

2. The automatic analyzer (1000) according to claim 1, wherein
the second temperature control unit (1036) is configured to sterilize the liquid in the diluent flow path (1033) and the internal standard solution flow path (1043) by controlling the temperature of the diluent flow path (1033) and the internal standard solution flow path (1043) at the second temperature.

3. The automatic analyzer according to claim 2, wherein
the first temperature control unit (1091) is configured to keep the analysis unit (1092) at the first temperature while the second temperature control unit (1036) controls the temperature of the diluent flow path (1033) and the internal standard solution flow path (1043 at the second temperature.

4. The automatic analyzer (1000) according to claim 1, wherein
the second temperature control unit (1036) is configured to:
start temperature control from the state where the temperature is controlled by the first temperature control unit (1091) at the first temperature,
transition to the state where the temperature is controlled at the second temperature within a certain period of time, and
transition from the state where the temperature is controlled at the second temperature to the state where the temperature is controlled at the first temperature.

5. The automatic analyzer (1000) according to claim 4, wherein
the diluent is a liquid having no antiseptic ability.

6. An automatic analyzer (1000) according to one of the previous claims, wherein the automatic analyzer (1000) is an automatic electrolyte analyzer (1000) configured to measure the concentration of ions contained in a specimen.

## Patentansprüche

1. Automatisches Analysegerät (1000), umfassend:
eine Analyseeinheit (1092) zum Analysieren einer Probe;
einen Verdünnungstank (1010) zum Verdünnen der Probe;
eine Messlösungsansaugdüse (1052) zum Zuführen der Messlösung von dem Verdünnungstank (1010) zu der Analyseeinheit (1092);
einen Fließweg für interne Standardlösung (1043) zum Zuführen der internen Standardlösung zu dem Verdünnungstank (1010);
einen Verdünnungsmittel-Fließweg (1033) zum Zuführen eines Verdünnungsmittels zu dem Verdünnungstank;
eine erste Temperatursteuereinheit (1091), die dazu ausgelegt ist, die Temperatur der Analyseeinheit (1092) während des Analysebetriebs auf eine erste Temperatur von 20°C bis 45°C zu steuern; und
eine zweite Temperatursteuereinheit (1036), die dazu ausgelegt ist, mit dem Fließweg für interne Standardlösung (1043) und dem Verdünnungsmittel-Fließweg (1033) in Kontakt zu stehen, und ist die zweite Temperatursteuereinheit (1036) dazu ausgelegt ist, nachdem der Analysebetrieb durch die Analyseeinheit (1092) abgeschlossen ist, die Temperatur des Fließwegs für interne Standardlösung (1043) und des Fließwegs für Verdünnungsmittel (1033) auf eine zweite Temperatur von 50°C bis 90°C zu steuern und dann zu der ersten Temperatur zurückzukehren, und
einen Flüssigkeitsentsorgungsmechanismus (1200) zum Ablassen von zumindest einem Teil der Flüssigkeit in dem Verdünnungstank (1010); wobei
der Verdünnungsmittel-Fließweg (1033) und der Fließweg für interne Standardlösung (1043) dazu ausgelegt sind, dass sie zum Wärmeaustausch miteinander fähig sind,
**dadurch gekennzeichnet, dass** das automatische Analysegerät so eingerichtet ist, dass nachdem die Temperatur auf die zweite Temperatur durch die zweite Temperatursteuereinheit (1036) gesteuert ist, das Verdünnungsmittel bei einer Temperatur äquivalent zur Raumtemperatur in den Verdünnungstank (1010) durch den Verdünnungsmittel-Fließweg (1033) zugeführt wird, und die zweite Temperatursteuereinheit (1036) einem Wärmeaustausch unterzogen wird, indem ein Abwärmevorgang zum Abführen von Wärme aus dem Fließweg für interne Standardlösung und dem Verdünnungsmittel-Fließweg durchgeführt wird, indem das Verdünnungsmittel zu dem Verdünnungsmittel-Fließweg mindestens einmal gesendet wird und die Flüssigkeit in dem Verdünnungstank mindestens einmal unter Verwendung des Flüssigkeitsentsorgungsmechanismus (1200) abgeführt wird, wodurch eine schnelle Rückkehr zu Analysebetrieben ermöglicht wird, ohne interne Standardlösung zu verbrauchen, und die Temperatur zu der ersten Temperatur zurückkehrt;
ein Wärmeisoliermaterial (1037), das zwischen der ersten Temperatursteuereinheit (1091) und der zweiten Temperatursteuereinheit (1036) angeordnet ist.

2. Automatisches Analysegerät (1000) nach Anspruch 1, wobei die zweite Temperatursteuereinheit (1036) dazu ausgelegt ist, die Flüssigkeit in dem Verdünnungsmittel-Fließweg (1033) und dem Fließweg für interne Standardlösung (1043) zu sterilisieren, indem die Temperatur des Fließwegs für Verdünnungsmittel (1033) und des Fließwegs für interne Standardlösung (1043) auf die zweite Temperatur gesteuert wird.

3. Automatisches Analysegerät nach Anspruch 2, wobei die erste Temperatursteuereinheit (1091) dazu ausgelegt ist, die Analyseeinheit (1092) auf der ersten Temperatur zu halten, während die zweite Temperatursteuereinheit (1036) die Temperatur des Fließwegs für Verdünnungsmittel (1033) und des Fließwegs für interne Standardlösung (1043) auf die zweite Temperatur steuert.

4. Automatisches Analysegerät (1000) nach Anspruch 1, wobei die zweite Temperatursteuereinheit (1036) eingerichtet ist zum:
Starten der Temperatursteuerung von dem Zustand, in dem die Temperatur durch die erste Temperatursteuereinheit (1091) auf die erste Temperatur gesteuert ist,
Übergehen in den Zustand, in dem die Temperatur auf die zweite Temperatur gesteuert ist, innerhalb einer bestimmten Zeitdauer, und
Übergehen von dem Zustand, in dem die Temperatur auf die zweite Temperatur gesteuert ist, zu dem Zustand, in dem die Temperatur auf die erste Temperatur gesteuert ist.

5. Automatisches Analysegerät (1000) nach Anspruch 4, wobei das Verdünnungsmittel eine Flüssigkeit ist, die keine antiseptische Fähigkeit aufweist.

6. Automatisches Analysegerät (1000) nach einem der vorhergehenden Ansprüche, wobei das automatische Analysegerät (1000) ein automatisches Elektrolytanalysegerät (1000) ist, das dazu ausgelegt ist, die Konzentration von Ionen zu messen, die in einer Probe enthalten sind.

## Revendications

1. Analyseur automatique (1000) comprenant :
une unité (1092) d'analyse pour analyser un échantillon ;
une cuve (1010) de dilution pour diluer l'échantillon ;
une buse (1052) d'aspiration de solution de mesure pour alimenter la solution de mesure depuis la cuve (1010) de dilution jusqu'à l'unité (1092) d'analyse ;
un chemin (1043) d'écoulement de solution standard interne pour alimenter la solution standard interne jusqu'à la cuve (1010) de dilution ;
un chemin (1033) d'écoulement de diluant pour alimenter un diluant jusqu'à la cuve de diluant ;
une première unité (1091) de commande de température configurée pour commander le température de l'unité (1092) d'analyse à une première température de 20°C à 45°C lors d'une opération d'analyse ; et
une deuxième unité (1036) de commande de température configurée pour venir en contact avec le chemin (1043) d'écoulement de solution standard interne et le chemin (1033) d'écoulement de diluant, et après que l'opération d'analyse par l'unité (1092) d'analyse est terminée, la deuxième unité (1036) de commande de température est configurée pour commander le température du chemin (1043) d'écoulement de solution standard interne et du chemin (1033) d'écoulement de diluant à une deuxième température de 50°C à 90°C, et ensuite revenir à la première température, et
un mécanisme (1200) de rejet de liquide pour évacuer au moins une partie du liquide dans la cuve (1010) de dilution ; dans lequel
le chemin (1033) d'écoulement de diluant et le chemin (1043) d'écoulement de solution standard interne sont configurés de façon à être aptes à échanger de la chaleur l'un avec l'autre,
**caractérisé en ce que** l'analyseur automatique est configuré de telle façon qu'après que la température a été commandée à la deuxième température par la deuxième unité (1036) de commande de température, le diluant à une température équivalente à une température ambiante est alimenté dans la cuve (1010) de dilution par l'intermédiaire du chemin (1033) d'écoulement de diluant, et la deuxième unité (1036) de commande de température subit un échange de chaleur en exécutant une opération d'évacuation de chaleur pour évacuer de la chaleur depuis le chemin d'écoulement de solution standard interne et le chemin d'écoulement de diluant en envoyant le diluant jusqu'au chemin d'écoulement de diluant au moins une fois et en déchargeant le liquide dans la cuve de dilution au moins une fois en utilisant le mécanisme (1200) de rejet de liquide, permettant ainsi un rapide retour à des opérations analytiques sans consommation de solution standard interne, et la température revient à la première température ;
un matériau (1037) d'isolation thermique disposé entre la première unité (1091) de commande de température et la deuxième unité (1036) de commande de température.

2. Analyseur automatique (1000) selon la revendication 1, dans lequel
la deuxième unité (1036) de commande de température est configurée pour stériliser le liquide dans le chemin (1033) d'écoulement de diluant et le chemin (1043) d'écoulement de solution standard interne en commandant la température du chemin (1033) d'écoulement de diluant et du chemin (1043) d'écoulement de solution standard interne à la deuxième température.

3. Analyseur automatique (1000) selon la revendication 2, dans lequel
la première unité (1091) de commande de température est configurée pour maintenir l'unité (1092) d'analyse à la première température tandis que la deuxième unité (1036) de commande de température commande la température du chemin (1033) d'écoulement de diluant et du chemin (1043) d'écoulement de solution standard interne à la deuxième température.

4. Analyseur automatique (1000) selon la revendication 1, dans lequel
la deuxième unité (1036) de commande de température est configurée pour :
commencer une commande de température depuis l'état où la température est commandée par la première unité (1091) de commande de température à la première température,
passer à l'état où la température est commandée à la deuxième température au sein d'une certaine période de temps, et
passer de l'état où la température est commandée à la deuxième température à l'état où la température est commandée à la première température.

5. Analyseur automatique (1000) selon la revendication 4, dans lequel
le diluant est un liquide n'ayant pas de capacité antiseptique.

6. Analyseur automatique (1000) selon l'une des revendications précédentes, dans lequel l'analyseur automatique (1000) est un analyseur automatique (1000) d'électrolytes configuré pour mesurer la concentration d'ions contenus dans un échantillon.
